# EUROPÄISCHE PATENTSCHRIFT

(11) **EP 2 450 198 B1**
(45) Veröffentlichungstag und Bekanntmachung des Hinweises auf die Patenterteilung: **23.07.2014**
(21) Anmeldenummer: 11007987.8
(22) Anmeldetag: 30.09.2011
(51) Int. Cl.: B60B 5/02, B60B 7/04, B60B 7/06, B60B 7/14, B60B 7/18

(54) **Zierspeiche für Fahrzeugrad**
Decorative spoke for vehicle wheel
Rayon de roue décorative pour roue de véhicule

(30) Priorität: 06.11.2010 DE 102010050698
(43) Veröffentlichungstag der Anmeldung: 09.05.2012
(73) Patentinhaber: Audi AG, 85045 Ingolstadt (DE)
(72) Erfinder: Freihart, Jürgen, 92345 Dietfurt (DE)
(74) Vertreter: Asch, Konrad

(56) Entgegenhaltungen:
- DE-U1- 7 615 138
- DE-U1- 9 309 706
- JP-A- 2002 120 501
- JP-A- 2005 324 799
- US-A- 2 699 361
- US-A- 3 312 505
- US-A- 5 577 809
- US-A1- 2008 303 338

## Beschreibung

Die Erfindung betrifft eine Zierspeiche zur Montage an einer Radfelge gemäß dem Oberbegriff des Anspruchs 1.

Die JP 2005 324 799 A offenbart eine Aluminiumfelge die aus einem ersten Aluminiumgrundkörper und einem zweiten Bauteil einer Aluminiumabdeckung zusammengesetzt ist. Die Abdeckung wird gemäß der D1 lösbar an der Aluminiumfelge befestigt.

Die JP 2002 120 501 A offenbart eine Speichenabdeckung, die über eine Schraub- oder Schnappverbindung direkt und vollflächig auf den Felgenkörper aufgesetzt wird.

Aus der EP 1 980 419 A1 ist eine Zierspeiche als Dekorationselement bekannt, welche auf ein Rad, das Aufnahmevorrichtungen zur Befestigung der Zierspeichen aufweist, befestigt werden kann.

Die Zierspeiche weist in seiner Grundgestaltung ein Kunststoffdekorationselement auf, das mit einem Hohlraum zwischen der Oberfläche und seiner Trägerstruktur versehen ist.

Diese Ausführungsform hat den Nachteil, dass zwischen den Fixierelementen der Zierspeiche, über welche die Zierspeiche an der Aufnahmevorrichtung der Felge befestigt wird, und der Oberfläche, der vorhandene Hohlraum mit weiteren Materialen, wie beispielsweise Karbonfasern, Glasfasern oder Keramikpulver gefüllt werden muss, um die Zierspeiche entsprechend der mechanischen Belastung zu verstärken, da Verstärkungsstrukturen nicht an das Dekorationselement angeformt werden können ohne die Oberfläche in Mitleidenschaft zu ziehen.

Die US 2008 / 303 338 A1 offenbart eine gattungsgemäße Zierspeiche, die zweiteilig ausgebildet ist, wobei sie ein äußeres Element zur Verzierung der Felge und ein inneres Element aufweist. Das innere Element ist am äußeren Element befestigt und von diesem beabstandet, um einen besonderen optischen Effekt zu erzielen.

Der Erfindung liegt die Aufgabe zugrunde, eine Zierspeiche anzugeben, welche einfach in der Herstellung ist, eine geringe Trägheit und hohe Schwingungssteifigkeit aufweist und bei welcher, die an der Radfelge angebrachten Aufnahme möglichst klein gestaltet werden können.

Die Aufgabe wird durch die kennzeichnenden Merkmale des Anspruchs 1 gelöst.

Die Unteransprüche bilden eine vorteilhafte Weiterentwicklung der Erfindung.

In bekannter Weise sind an einer Radfelge Aufnahmen vorgesehen, in welcher eine Zierspeiche angebracht wird.

Die Erfindung zeichnet sich dadurch aus, dass die Zierspeiche wenigstens zweiteilig ausgebildet ist und zumindest ein Trägerteil und zumindest ein Zierteil umfasst. Das Trägerteil ist an den Aufnahmen der Radfelge befestigbar, wobei wiederum das Zierteil am Trägerteil lösbar befestigbar ist.

Dies hat den Vorteil, dass durch die unabhängige Ausbildung des Trägerteils vom Zierteil das Trägerteil entsprechend den mechanischen Anforderungen an eine Zierspeiche optimiert werden kann, ohne dabei Rücksicht auf das Zierteil und dessen Formgebung nehmen zu müssen. Durch ein entsprechend gefertigtes Trägerteil, kann eine hohe Vibrationssteifigkeit gewährleistet werden, und trotzdem eine geringe Trägheit erreicht werden.

Des weiteren ergibt sich der Vorteil, dass die Zierteile, die aufgrund des Trägerteils nicht mehr auf mechanische Belastungen abgestimmt werden müssen, nun sehr einfach und günstig hergestellt werden können. So können günstig hergestellte ein unterschiedliches Dekor bzw. eine unterschiedliche Form aufweisende Zierteile an dem Trägerteil befestigt und auf einfache Weise ausgetauscht werden.

In einer besonders vorteilhaften Ausführungsform können Zierteil und Trägerteil als geschlossenes Hohlprofil ausgebildet sein. Diese Profile können durch Klebeschweißen oder durch Extrusion hergestellt werden. Alternativ dazu können Zierteil und Trägerteil auch jeweils als offenes Profil gefertigt werden.

Um das Trägerteil an der Radfelge zu befestigen oder das Zierteil am Trägerteil, können verschiedene Befestigungsformen Anwendung finden. Die Befestigung kann form- und/oder stoffschlüssig und/oder kraftschlüssig hergestellt werden. Dabei sind Trägerteil und Zierteil mit den entsprechenden Verbindungsmitteln versehen.

Eine besonders vorteilhafte Ausführung ist die Befestigung des Trägerteils am Rad mittels einer Schraubverbindung.

Vorzugsweise kann das Zierteil über eine Schnappverbindung am Trägerteil befestigt werden. Dies sorgt für eine leichte Austauschbarkeit des Zierteils und trotzdem für eine sichere Befestigung.

Für den Fall, dass das Trägerteil über eine Schraubverbindung mit der Aufnahme der Radfelge verbunden wird, ist in vorteilhafter Weise eine Gewindebuchse im Kunststoff des Trägerteils eingeprägt bzw. eingeschweißt oder eingespritzt. Auf das Trägerteil können nun Zierteile beliebiger Form, insbesondere über eine kraft- und/oder formschlüssige Verbindung angebracht werden. Die Trägerteile können gerade ausgebildet sein, oder einen y- oder einen w-förmigen Querschnitt aufweisen. Darüber hinaus sind alle möglichen weiteren Gestaltungen denkbar.

Der Gegenstand der Erfindung wird im Folgenden anhand der Zeichnungen genauer beschrieben. Es werden die in der Bezugszeichenliste aufgeführten Bezugszeichen verwendet.

Es zeigen:
- Fig. 1: eine Zierspeiche mit einem stabförmigen Trä-ger und einem als offenes Hohlprofil geform-tes Zierteil;
- Fig. 2: eine Zierspeiche mit einem einer Doppelstrebe aufweisenden Trägerteil und einen als Hohl-profil geformten Zierteil;
- Fig. 3: einen Querschnitt durch eine Zierspeiche;
- Fig. 4: ein weiterer Querschnitt durch eine Zierspei-che;
- Fig. 5: ein Querschnitt durch eine weitere Ausfüh-rungsform einer Zierspeiche;
- Fig. 6: eine Explosionszeichnung einer Zierspeiche; und
- Fig. 7: einen Querschnitt eines Felgenausschnitts mit eingesetzter Zierspeiche.

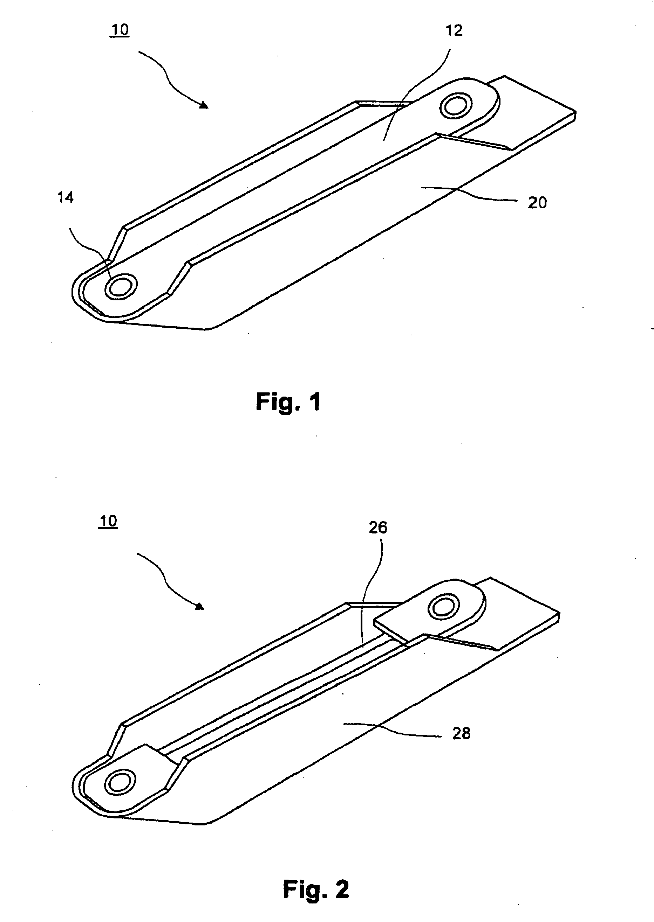

Fig. 1 zeigt eine perspektivische Ansicht einer Zierspeiche 10. Die Zierspeiche umfasst ein Trägerteil 12, welches in seiner Grundfläche stabförmig ausgebildet ist. In das Trägerteil 12 sind Gewinde 14 eingebracht, um den Träger an einer Aufnahme zu befestigen. Um das Trägerteil 12 ist ein Zierteil 20 der Zierspeiche befestigbar.

Fig. 2 zeigt eine weitere perspektivische Ansicht einer Zierspeiche 24. In dieser Ausführungsform ist das Trägerteil 26 als Strebe ausgebildet. Durch die Ausbildung des Trägerteils als Strebe kann die Masse des Trägerteils, und somit die Masse der gesamten Zierspeiche reduziert werden, wobei trotzdem noch ein hohes Maß an Vibrationssteifigkeit gewährleistet ist.

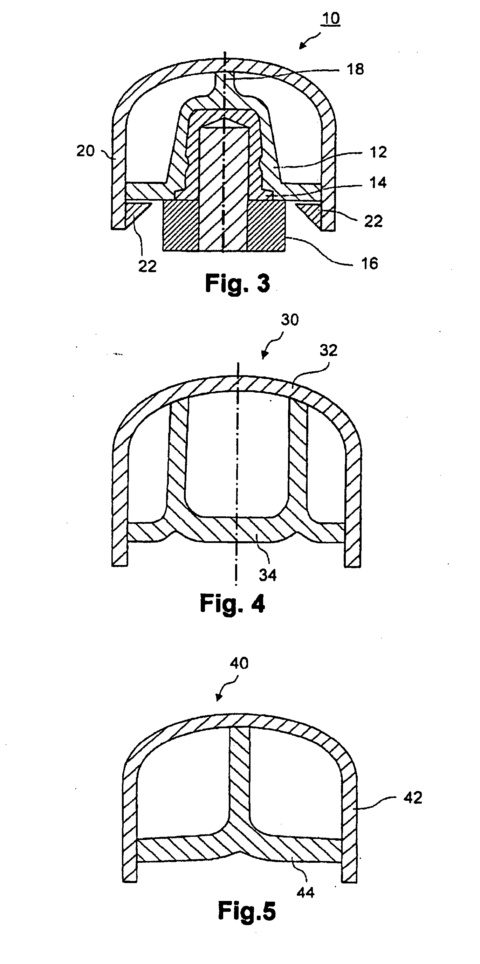

Fig. 3 zeigt einen Querschnitt durch eine Ausführungsform einer Zierspeiche 10, mit einem y-förmigen Profil ihres Trägerteils 12. Diese ist mit ihrem Trägerteil 12 über eine eingegossene Gewindebuchse 14 mit der Aufnahme 16 der Radfelge verbunden. An dem Trägerteil 12, welches eine Stützstrebe 18 aufweist, ist das Zierteil 20 befestigt. Das Zierteil 20 ist als u-förmiges Hohlprofil ausgebildet und weist an seinen Enden Spannhaken 22 auf, die das Trägerteil 12 umgreifen. Das Trägerteil 12 stabilisiert die Zierspeiche 10, indem sie über die Stützstrebe 18 das u-förmige Hohlprofil das Zierteil 20 verspannt.

Fig. 4 zeigt eine weitere Ausführungsform einer Zierspeiche 30, wobei die Zierspeiche 30 ein u-förmiges Zierteil 32 umfasst, welches über ein w-förmiges Trägerteil 34 gespannt ist. Diese Ausführungsform hat den Vorteil, dass durch die W-Form des Trägerteils 34 das Zierteil 32 an zwei Stützlinien verspannt ist. Durch die zweiteilige Ausgestaltung der Zierspeiche 30 wird eine optimale Vibrationssteifigkeit gewährleistet und trotzdem eine einfache und makellose Fertigung des dekorativen Zierteils 32 ermöglicht. Dies liegt darin begründet, dass bei der Gestaltung des Zierteils 32 keine Rücksicht auf mechanische Eigenschaften die das Zierteil 32 aufweisen soll genommen werden muss.

Fig. 5 zeigt eine weitere grundsätzlich mögliche Geometrie einer Zierspeiche 40. In dieser Ausführungsform ist das Trägerteil 44 t-förmig ausgebildet. Über das Trägerteil ist das Zierteil 42 gespannt, das als u-förmiges Hohlprofil ausgebildet ist.

Entsprechend kann die Zierspeiche mit geringem Materialaufwand gefertigt werden und weist demzufolge eine nur sehr geringe Trägheit auf. Da ein Großteil der mechanischen Belastung durch das Trägerteil 44 aufgenommen werden kann, erlaubt dies weiterhin eine sehr kleine Ausgestaltung der felgenseitigen Aufnahme. Dies fördert wiederum die Laufeigenschaften und reduziert die Trägermasse am Rad.

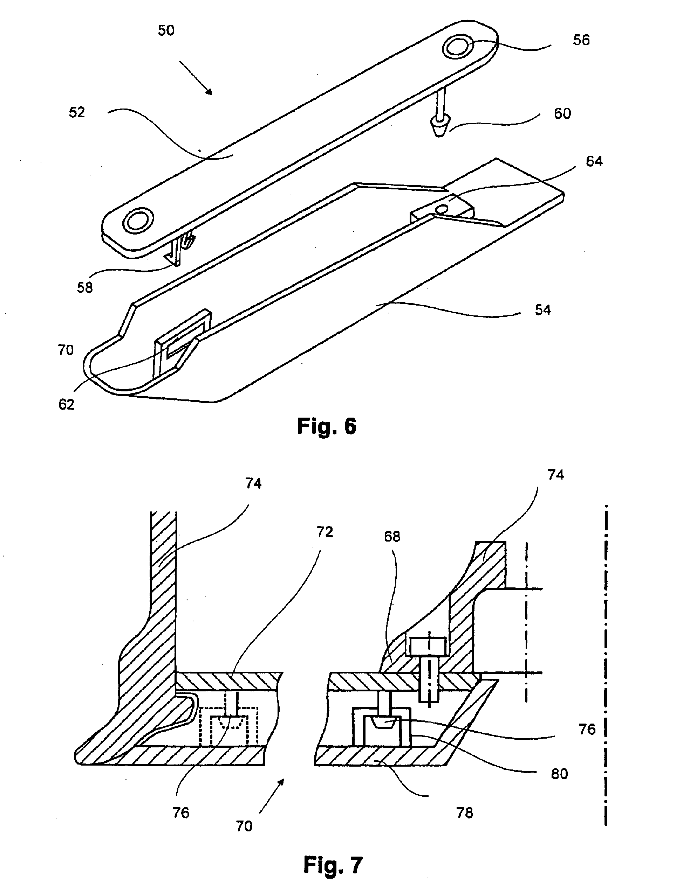

Fig. 6 zeigt eine Zierspeiche 50 in Explosionsansicht. Die Zierspeiche 50 umfasst ein Trägerteil 52 sowie ein Zierteil 54. Das Trägerteil 52 wird über Verbindungsmittel, insbesondere Schrauben, über die in das Trägerteil 52 eingespritzten Gewindebuchsen 56 an der Aufnahme der Radfelge befestigt.

Ferner weist das Trägerteil weitere Verbindungsmittel 58 und 60 auf, über welche das Zierteil 54 mit dem Trägerteil 52 verbunden werden kann. Erste Verbindungsmittel 58 sind als Spannhaken ausgebildet. Die Spannbaken 58 greifen seitlich in Rastmittel 62, die an das Zierteil 54 angeformt sind, ein. Das zweite Verbindungsmittel 60 ist als Kunststoffkegelform ausgebildet und greift in eine korrespondierende Aufnahme 64 ein. Somit ist auf einfache und stabile Weise das Zierteil 54 am Trägerteil 52 lösbar befestigbar.

Fig. 7 zeigt schematisch einen Ausschnitt einer Radfelge im Querschnitt. In diesem Ausschnitt wird deutlich, dass das Trägerteil 72 der Zierspeiche 70 über eine Schraubverbindung an der Aufnahme 68 an der Radfelge 74 montiert ist. An dem Trägerteil sind Befestigungszapfen 76 vorgesehen, an die ein Zierteil 78 aufgesetzt werden kann.

Dazu greifen die Zapfen in dafür vorgesehene korrespondierende Aufnahmen 80 des Zierteils 78 ein. Somit kann auf einfache Weise ein Zierteil 78 bei Beschädigung ersetzt werden oder zur Änderung des Designs ausgetauscht werden.

### Bezugszeichenliste

- 10: Zierspeiche
- 12: Trägerteil
- 14: Gewindebuchse
- 16: Felgenaufnahme
- 18: Stützstrebe
- 20: Zierteil
- 22: Spannhaken
- 24: Zierspeiche
- 26: Trägerteil
- 28: Zierspeiche
- 30: Zierspeichen
- 32: Zierteil
- 34: Trägerteil
- 40: Zierspeiche
- 42: Zierteil
- 44: Trägerteil
- 50: Zierspeiche
- 52: Trägerteil
- 54: Zierteil
- 56: Aufnahmen
- 58: Verbindungsmittel
- 60: Verbindungsmittel
- 62: Rastmittel
- 64: korrespondierende Aufnahmen
- 70: Zierspeiche
- 72: Trägerteil
- 74: Radfelge
- 76: Befestigungszapfen
- 78: Zierteil
- 80: korrespondierende Aufnahmen

## Patentansprüche

1. Zierspeiche (10, 24, 28, 30, 40, 50, 70) zum Anbringen an einer Radfelge eines Kraftfahrzeugs, wobei an der Radfelge Aufnahmen (16, 68) vorgesehen sind, an welchen die Zierspeiche (10, 24, 28, 30, 40, 50, 70) befestigbar ist, **,wobei** die Zierspeiche (10, 24, 28, 30, 40, 50, 70) wenigstens zweiteilig ausgebildet ist und zumindest ein Zierteil-(10, 24, 28, 30,40, 50, 70)umfasst, **dadurch gekennzeichnet, dass** die Zierspeiche (10, 24, 28, 30, 40, 50, 70) zumindest ein Trägerteil (12, 26, 34, 44, 52, 72)aufweist, wobei das Trägerteil (12, 26, 34, 44, 52, 72) an den Aufnahmen der Radfelge (16, 68) und das Zierteil (10, 24, 28, 30, 40, 54, 78) lösbar am Trägerteil (12, 26, 34, 44, 52, 72) befestigbar ist

2. Zierspeiche nach Anspruch 1, **dadurch gekennzeichnet, dass** Trägerteil (12, 26, 34, 44, 52, 72) und Zierteil (10, 24, 28, 30, 40, 54, 78) aus Verbundstoff, oder Harz oder einem Kunststoff gefertigt ist.

3. Zierspeiche nach einem der vorangehenden Ansprüche, **dadurch gekennzeichnet, dass** das Trägerteil (12, 26, 34, 44) y-förmig, w-förmig, oder t-förmig ausgebildet ist.

4. Zierspeiche nach einem der vorangehenden Ansprüche, **dadurch gekennzeichnet, dass** das Trägerteil (12, 26, 34, 44) formschlüssig, kraftschlüssig oder stoffschlüssig mit der Radfelge verbunden ist.

5. Zierspeiche (10, 24, 28, 30, 40, 50, 70) nach einem der vorangehenden Ansprüche, **dadurch gekennzeichnet, dass** das Trägerteil (12, 26, 34, 44, 52, 72) Mittel zur kraftschlüssigen Verbindung mit einem Zierteil (10, 24, 28, 30, 40, 54, 78) bereitstellt.

## Claims

1. Decorative spoke (10, 24, 28, 30, 40, 50, 70) for mounting on a wheel rim of a motor vehicle, wherein retainers (16, 68) are provided on the wheel rim to which the decorative spoke (10, 24, 28, 30, 40, 50, 70) can be attached, the decorative spoke (10, 24, 28, 30, 40, 50, 70) being configured in at least two parts and comprising at least one decorative part (10, 24, 28, 30, 40, 50, 70), **characterised in that** the decorative spoke (10, 24, 28, 30, 40, 50, 70) comprises at least one carrier part (12, 26, 34, 44, 52, 72), the carrier part (12, 26, 34, 44, 52, 72) being adapted to be releasably attached to the retainers of the wheel rim (16, 68) and the decorative part (10, 24, 28, 30, 40, 54, 78) being adapted to be releasably attached to the carrier part (12, 26, 34, 44, 52, 72).

2. Decorative spoke according to claim 1, **characterised in that** the carrier part (12, 26, 34, 44, 52, 72) and decorative part (10, 24, 28, 30, 40, 54, 78) is made of composite material or resin or plastics.

3. Decorative spoke according to one of the preceding claims, **characterised in that** the carrier part (12, 26, 34, 44) is of y-shaped, w-shaped or t-shaped configuration.

4. Decorative spoke according to one of the preceding claims, **characterised in that** the carrier part (12, 26, 34, 44) is connected to the wheel rim by interlocking, frictional or material engagement.

5. Decorative spoke (10, 24, 28, 30, 40, 50, 70) according to one of the preceding claims, **characterised in that** the carrier part (12, 26, 34, 44, 52, 72) provides means for frictional engagement with a decorative part (10, 24, 28, 30, 40, 54, 78).

## Revendications

1. Rayon de roue décoratif (10, 24, 28, 30, 40, 50, 70) destiné à être placé sur une jante de roue d'un véhicule automobile, des logements (16, 68) auxquels peut être fixé le rayon de roue décoratif (10, 24, 28, 30, 40, 50, 70) étant prévus sur la jante, le rayon de roue décoratif (10, 24, 28, 30, 40, 50, 70) étant conçu au moins en deux parties et comprenant au moins une partie décorative (10, 24, 28, 30, 40, 50, 70), **caractérisé en ce que** le rayon de roue décoratif (10, 24, 28, 30, 40, 50, 70) comporte au moins une partie porteuse (12, 26, 34, 44, 52, 72), la partie porteuse (12, 26, 34, 44, 52, 72) pouvant être fixée aux logements (16, 68) de la jante et la partie décorative (10, 24, 28, 30, 40, 54, 78) pouvant être fixée à la partie porteuse (12, 26, 34, 44, 52, 72) de manière à rester amovible.

2. Rayon de roue décoratif selon la revendication 1, **caractérisé en ce que** la partie porteuse (12, 26, 34, 44, 52, 72) et la partie décorative (10, 24, 28, 30, 40, 54, 78) sont fabriquées en un matériau composite, en résine ou en plastique.

3. Rayon de roue décoratif selon l'une des revendications précédentes, **caractérisé en ce que** la partie porteuse (12, 26, 34, 44) est conçue en forme de Y, de W ou de T.

4. Rayon de roue décoratif selon l'une des revendications précédentes, **caractérisé en ce que** la partie porteuse (12, 26, 34, 44) est assemblée à la jante par concordance de forme, par adhérence ou par concordance de matière.

5. Rayon de roue décoratif (10, 24, 28, 30, 40, 50, 70) selon l'une des revendications précédentes, **caractérisé en ce que** la partie porteuse (12, 26, 34, 44, 52, 72) dispose de moyens pour l'assemblage par adhérence à une partie décorative (10, 24, 28, 30, 40, 54, 78).
